# EUROPÄISCHE PATENTANMELDUNG

(11) **EP 4 613 643 A1**
(43) Veröffentlichungstag der Anmeldung: **10.09.2025**
(21) Anmeldenummer: 25161212.3
(22) Anmeldetag: 03.03.2025
(51) Int. Cl.: B64C 25/26, B64C 1/14, B64C 3/56

(54) **VERRIEGELUNGSVORRICHTUNG FÜR BEWEGLICHE KOMPONENTEN, INSBESONDERE FLUGZEUGKOMPONENTEN WIE EIN FLUGZEUGFAHRWERK**

(30) Priorität: 06.03.2024 DE 102024106478
(71) Anmelder: Liebherr-Aerospace Lindenberg GmbH, 88161 Lindenberg (DE)
(72) Erfinder: NASCIMENTO DUVAL, Marcelo, 88138 Sigmarszell (DE); PALT, Matthias, 88179 Oberreute (DE); ARNUSCH, Teresa, 88178 Heimenkirch (DE)
(74) Vertreter: Herrmann, Uwe

(57) **Zusammenfassung**

Die Erfindung schlägt eine Verriegelungsvorrichtung für bewegliche Komponenten, insbesondere Flugzeugkomponenten wie ein Flugzeugfahrwerk vor, die einen um eine Drehachse drehbaren Haken (2) zum Aufnehmen eines fest am Fahrwerk angeordneten Stiftabschnitts (3) umfasst, wobei der Haken eine U-, C- oder V-förmige Öffnung aufweist, die dazu ausgelegt ist, bei einer ersten Drehposition den Stiftabschnitt in einem verriegelten Zustand aufzunehmen und bei einer zweiten Drehposition den Stiftabschnitt in einem entriegelten Zustand freizugeben. Die Erfindung ist dadurch gekennzeichnet, dass mindestens einer der beiden Schenkel der U-, C- oder V-förmigen Öffnung in Breitenrichtung eine nicht konstante Kontur aufweist.

## Beschreibung

Die vorliegende Erfindung betrifft eine Verriegelungsvorrichtung für bewegliche Komponenten, insbesondere Flugzeugkomponenten wie ein Flugzeugfahrwerk oder dergleichen.

Verriegelungselemente spielen eine zentrale Rolle in der Sicherheit und Funktionalität einer Vielzahl von Anwendungen, da durch diese sichergestellt werden kann, dass eine bewegliche Komponente sich nicht unbeabsichtigter Weise löst und dadurch Schäden verursacht. Von besonderer Wichtigkeit ist dies bei Flugzeugkomponenten, insbesondere bei kritischen Systemen wie dem Flugzeugfahrwerk, da im Flugbetrieb gewährleistet sein muss, dass bewegliche Teile während des Flugbetriebs sicher fixiert sind aber bei Bedarf mit hoher Verlässlichkeit freigegeben werden, wenn es die Betriebsbedingungen erfordern.

Zieht man als Beispiel für eine bewegliche Komponente das einziehbare Fahrwerk eines Flugzeugs heran, so wird unmittelbar bewusst, dass die Konstruktion und Verriegelung sowie eine sichere Freigabe dieser Komponente von höchster Wichtigkeit sind, da sie direkt die Sicherheit während des Fluges und bei der Landung beeinflussen. Die herkömmlichen, aus dem Stand der Technik bekannten Verriegelungsmechanismen für einziehbare Fahrwerke basieren auf einer "Haken und Stift"-Lösung und haben sich im Großen und Ganzen bewährt, weisen jedoch signifikante Nachteile auf, die die Leistung und Sicherheit beeinträchtigen können. So wird in der herkömmlichen Ausführung das Fahrwerk in eingefahrener Position durch einen drehbaren Haken, der zur Flugzeugstruktur gehört, und einen am Fahrwerk fest montierten Stift gesichert. Die Aufwärtsbewegung des Stiftes in den Haken führt, hervorgerufen durch das Einfahren des Flugzeugfahrwerks, zum Schließen und teilweise auch zum Verriegeln des Systems. Obwohl dieses Prinzip grundlegend funktioniert, sind für seine korrekte Funktion spezifische Voraussetzungen erforderlich, wie die exakte Positionierung und Ausrichtung des Stiftes innerhalb des Hakens, um ein Verkanten zu vermeiden.

Kommt es aufgrund von Fertigungstoleranzen oder einer Verformung eines Bauteils zu einem Verkanten von Stift und Haken, kann ein anschließend gewünschtes Freigeben des verriegelten Fahrwerks unter Umständen nicht durchgeführt werden.

Die Präzision beim Zusammenspiel der unterschiedlichen Komponenten ist aufgrund von Fertigungstoleranzen und potenziellen Verformungen herausfordernd und nur schwer umzusetzen, sodass immer ein Restrisiko eines Verkantens verbleibt.

Bisherige Lösungsansätze zum Vermeiden eines Verkantens, die darauf abzielen, den Abstand zwischen Stifthalterung und Haken zu vergrößern oder die Hakenöffnung zu vergrößern, führen zu einer nachteilhaften Konstruktion, die zu Überdimensionierung, erhöhten Lasten auf den Stift, vergrößertes Gewicht und einem unnötig großen Spiel zwischen den Verriegelungskomponenten führt. Dies kann die Leistungsfähigkeit und Kosten der Verriegelungsvorrichtung nachteilhaft beeinträchtigen, da bspw. ein zu großes Spiel zwischen der Aufnahme des Hakens und des in der Aufnahme angeordneten Stifts zu einer ungewünschten Bewegung und einem Anschlagen des Stifts in der Aufnahme zu einer sehr hohen Abnutzung führt.

Mit der vorliegenden Erfindung nach dem Anspruch 1 gelingt es, die vorstehend aufgeführten Probleme zu überwinden oder zumindest abzumildern. Vorteilhafte Ausgestaltungen finden sich dabei in den abhängigen Ansprüchen.

Der erfindungsgemäße Anspruch 1 schlägt ein optimiertes Design der U-, V- oder C-förmigen Aufnahme zum Umgreifen des Stiftabschnitts zuvor, das die Anforderungen an die Toleranzen reduziert und/oder die Wahrscheinlichkeit eines Verkantens verringert. Dies erhöht die Effizienz und Zuverlässigkeit der Verriegelung. Der Gegenstand des Anspruchs 1 ist dabei eine Verriegelungsvorrichtung, die gegenüber dem aus dem Stand der Technik bekannten Umsetzungen vorteilhaft ist, da diese nicht nur einfacher zu produzieren und zu warten ist, sondern auch eine robustere Leistung unter verschiedensten Betriebsbedingungen bietet.

Die Erfindung betrifft eine Verriegelungsvorrichtung für bewegliche Komponenten, insbesondere Flugzeugkomponenten wie ein Flugzeugfahrwerk, die einen um eine Drehachse drehbaren Haken zum Aufnehmen eines fest am Fahrwerk angeordneten Stiftabschnitts umfasst, wobei der Haken eine U-, V- oder C-förmige Öffnung aufweist, die dazu ausgelegt ist, bei einer ersten Drehposition den Stiftabschnitt in einem verriegelten Zustand aufzunehmen und bei einer zweiten Drehposition den Stiftabschnitt in einem entriegelten Zustand freizugeben. Die Verriegelungsvorrichtung ist dadurch gekennzeichnet, dass mindestens einer der beiden Schenkel der U-, V- oder C-förmigen Öffnung in Breitenrichtung eine nicht konstante Kontur aufweist.

Indem einer oder beide der Schenkel eine nicht-konstante Kontur in ihrer Breitenrichtung aufweisen, kommt es bei einer Schrägstellung des in der U-, V- oder C-förmigen Öffnung aufgenommenen Stiftabschnitts mit einer deutlich geringeren Wahrscheinlichkeit zu einem Verkanten.

Aus dem Stand der Technik bekannte Verriegelungsvorrichtung besitzen dabei Schenkel, die in ihrer Breitenrichtung jeweils eine durchgehend geradlinige Kontur in ihrer Breitenrichtung aufweisen. Nachteilig hieran ist, dass bei einem schrägen Einführen eines Stiftabschnitts in die durch die Schenkel gebildete U-förmige Öffnung, deren Schenkel in Breitenrichtung geradlinig ausgebildet sind, ein Verkanten mit hoher Wahrscheinlichkeit auftritt, sodass die Funktionalität eines Verriegelns oder eines Freigebens mithilfe der Verriegelungsvorrichtung nicht mehr gewährleistet ist.

Genau hier setzt die vorliegende Erfindung an und schlägt eine U-, V- oder C-förmige Öffnung vor, bei der mindestens einer der beiden Schenkel in seiner Breitenrichtung nicht konstant ausgebildet ist. Dadurch kann bei einem schrägen Einführen des Stiftabschnitts in die U-, V- oder C-förmige Öffnung die Wahrscheinlichkeit eines Verkantens verringert werden.

Nach einer optionalen Fortbildung der vorliegenden Erfindung kann vorgesehen sein, dass die nicht konstante Kontur mindestens einer der beiden Schenkel der U-, V- oder C-förmigen Öffnung in Breitenrichtung konvex ausgebildet ist, vorzugsweise durch das Vorsehen einer balligen Struktur.

Durch das Vorsehen einer konvexen Struktur, die sich von mindestens einem der beiden Schenkel in Richtung des anderen Schenkels erstreckt, ist eine vorteilhafte Ausgestaltung in der Ausformung des Schenkels gegeben. Schließlich erhält man gegenüber einer geradlinig verlaufenden Kontur des Schenkels einen größeren Spielraum für eine Verdrehung des Stifts gegenüber der Breitenrichtung, ohne dass dieser mit einem entsprechend konvex ausgebildeten Schenkel in Kontakt kommt und die Gefahr eines Verkantens besteht.

Die konvexe Struktur erhebt sich dabei in den durch die U-, V- oder C-förmige Öffnung gebildeten Aufnahmeraum und verläuft in ihrer konvexen Ausprägung in Breitenrichtung der Verriegelungsvorrichtung.

Nach einer vorteilhaften Modifikation der vorliegenden Erfindung kann ferner vorgesehen sein, dass die nicht konstante Kontur mindestens einer der beiden Schenkel der U-, V- oder C-förmigen Öffnung in Breitenrichtung derart ausgebildet ist, dass diese in ihrer in Breitenrichtung gesehenen Mitte eine maximale Erstreckung hin zum gegenüberliegenden Schenkel besitzt, vorzugsweise wobei die Erstreckung von der in Breitenrichtung gesehenen Mitte zu einem jeden der beiden Randbereiche kontinuierlich oder diskontinuierlich abnimmt.

Durch das Ausbilden der maximalen Erstreckung eines Schenkels in seiner in Breitenrichtung gesehenen Mitte, wird die Wahrscheinlichkeit eines Verkantens mit einem in die U-, V- oder C-förmige Öffnung eingeführten Stiftabschnitt weiter verringert, dessen Längsachse parallel zur breiten Achse verläuft.

Nach der Erfindung kann ferner vorgesehen sein, dass die beiden Schenkel in Breitenrichtung gesehen eine identische Kontur besitzen, vorzugsweise über ihre jeweilige Länge oder einem Längenabschnitt hinweg, bevorzugterweise wobei die Länge eines jeweiligen Schenkels von dem zugehörigen Stegabschnitt zu einem distalen Ende des Schenkels verläuft.

Dabei ist es von Vorteil, wenn die beiden die U-, V- oder C-förmige Öffnung definierenden Schenkel in ihrer in Breitenrichtung verlaufenden Kontur identisch ausgebildet sind.

Nach einer optionalen Modifikation der vorliegenden Erfindung kann vorgesehen sein, dass die beiden Schenkel in Breitenrichtung gesehen eine unterschiedliche Kontur besitzen, vorzugsweise wobei die Länge eines jeweiligen Schenkels von dem zugehörigen Stegabschnitt zu einem distalen Ende des Schenkels verläuft.

Von der Erfindung ist aber auch der Fall umfasst, wobei die beiden die U-, V- oder C-förmige Öffnung definierenden Schenkel in ihrer in Breitenrichtung verlaufenden Kontur unterschiedlich ausgestaltet sind. Dies kann Vorteile mit sich bringen in Bezug auf die Herstellung der Verriegelungsvorrichtung und auf das Führungsverhalten bei einem Einschieben des Stegabschnitts in die U-, V- oder C-förmige Öffnung. So kann bspw. gewährleistet werden, dass ein verdrehter Stegabschnitt durch einen Kontakt mit einer in Breitenrichtung verlaufenden Kontur eines Schenkels in seine ursprüngliche Orientierung zurückgedrängt wird, aber aufgrund der nicht identischen Ausgestaltung des anderen Schenkels die Gefahr eines Verkantens nicht auftritt.

Nach einer optionalen Fortbildung der vorliegenden Erfindung kann ferner vorgesehen sein, dass die Breitenrichtung parallel zur Drehachse des Hakens verläuft und/oder die jeweilige Kontur der Schenkel der U-, V- oder C-förmigen Öffnung diejenigen Flächen sind, die einander zugewandt sind und zwischen denen der Stiftabschnitt zum Aufnehmen einer verriegelten Position geführt ist.

Ferner kann nach einer vorteilhaften Ausgestaltung der vorliegenden Erfindung vorgesehen sein, dass die beiden Schenkel der U-, V- oder C-förmigen Öffnung in ihrer Längsrichtung parallel zueinander verlaufen.

Nach einer vorteilhaften Fortbildung der vorliegenden Erfindung kann vorgesehen sein, dass die U-, V- oder C-förmige Öffnung zwei im Wesentlichen geradlinig verlaufende Schenkel und einen die beiden Schenkel miteinander verbindenden gekrümmten Stegabschnitt umfasst bzw. hieraus besteht.

Ferner kann nach der Erfindung vorgesehen sein, dass die U-, V- oder C-förmige Öffnung zwei Schenkel unterschiedlicher Länge besitzt.

Das Vorsehen von Schenkeln unterschiedlicher Länge kann insbesondere deswegen vorteilhaft sein, da das Verdrehen des Hakens auch durch das Einbringen des Stiftabschnitts in die U-, V- oder C-förmige Öffnung bewerkstelligt werden kann. Dabei ist es dann hilfreich, wenn die beiden die U-, V- oder C-förmige Öffnung bildenden Schenkel unterschiedlich lang ausgestaltet sind.

Nach einer weiteren vorteilhaften Modifikation der vorliegenden Erfindung kann vorgesehen sein, dass die U-, V- oder C-förmige Öffnung in einer Ansicht auf eine Ebene, dessen Normale parallel zur Drehachse des Hakens verläuft, ausgebildet ist.

Die Erfindung betrifft ferner ein System aus Verriegelungsvorrichtung und einer beweglichen Komponente, insbesondere Flugzeugkomponente wie ein Flugzeugfahrwerk, wobei die Verriegelungsvorrichtung nach einem der diskutierten Aspekte ausgestaltet ist, vorzugsweise wobei die bewegliche Komponente eine Flugzeugkomponente ist, insbesondere ein einfahrbares Flugzeugfahrwerk, eine Türe, eine Landeklappe oder eine Flügelspitze, welche in einem eingefahrenen/eingeklappten Zustand durch die Verriegelungsvorrichtung verriegelbar ist.

Dabei kann ferner vorgesehen sein, dass die Drehachse des Hakens beispielsweise im fehlerfreien /nicht schrägen Fall parallel zur Längsachse des Stiftabschnitts angeordnet ist, wobei vorzugsweise eine Abweichung der Parallelität von der Drehachse des Hakens zur Längsachse des Stiftabschnitts einen unerwünschten Zustand darstellt. Dies gilt nicht nur für den fehlerfreien Fall. So kann auch bei Herstellungstoleranzen- oder verformungsbedingt (wenn das Flugzeug oder Flügel sich verformt) die Parallelität nicht sichergestellt werden.

Wie bereits einleitend erwähnt, kann ein Verdrehen der Längsachse des Stiftabschnitts zu einem Verkanten in der U-, V- oder C-förmigen Öffnung des Hakens führen. Von daher ist es ein vom Optimalfall abweichender Zustand, wenn die Drehachse des Hakens nicht parallel zur Längsachse des Stiftabschnitts ausgerichtet ist.

Nach einer weiteren optionalen Fortbildung der vorliegenden Erfindung kann vorgesehen sein, dass der Stiftabschnitt an einem oder beiden Endbereichen an einer Halterung der beweglichen Komponente befestigt ist oder integraler Bestandteil davon ist.

Der Stiftabschnitt kann also an seinen beiden Endbereichen fest mit einer Halterung verbunden sein oder ist einteilig mit dieser ausgeführt. Demnach besitzt der Stiftabschnitt kein freies Ende, sondern geht an jedem seiner beiden Enden in Längsrichtung unmittelbar in die Halterung über oder ist an dieser dort befestigt.

Nach einer weiteren vorteilhaften Ausgestaltung der vorliegenden Erfindung kann vorgesehen sein, dass das Umgreifen des Hakens an dem Stiftabschnitt in einem Bereich erfolgt, der in etwa mittig, vorzugsweise im mittleren Drittel der Längsausdehnung des Stiftabschnitts, bevorzugterweise im mittleren Fünftel, zwischen den an den Endbereichen vorgesehenen Halterungen des Stiftabschnitts ausgebildet ist.

Das Angreifen der U-, V- oder C-förmigen Öffnung des Hakens in einem Mittenbereich des Stiftabschnitts sorgt für eine besonders geringe Wahrscheinlichkeit eines Verkantens, da die Bereiche der an den Endbereichen des Stiftabschnitts vorgesehenen Halterung dann typischerweise nicht mit den Schenkeln der U-, V- oder C-förmigen Öffnung kollidieren. Dies ist aber mit höherer Wahrscheinlichkeit möglich, wenn der Angriffsbereich der U-, V- oder C-förmigen Öffnung des Hakens nicht mittig entlang der Länge des Stiftabschnitts bzw. mittig zu den Halterungen für den Stiftabschnitt angeordnet ist.

Die Erfindung betrifft zudem ein Luftfahrzeug mit einer Verriegelungsvorrichtung nach einem der vorhergehend diskutierten Aspekte oder einem System nach einem der vorhergehend diskutierten Aspekte.

So kann nach dieser Fortbildung bspw. das einfahrbare Fahrwerk drehbar an der Struktur des Luftfahrzeugs angeordnet sein, damit es zwischen einer ausgefahrenen und einer eingefahrenen Position wechseln kann.

Weitere Merkmale, Einzelheiten und Vorteile der Erfindung werden anhand der nachfolgenden Figurenbeschreibung ersichtlich. Dabei zeigen:
- Fig. 1:: eine Schnittdarstellung der erfindungsgemäßen Verriegelungsvorrichtung mit einem in die U-förmige Öffnung einzuführenden Stiftabschnitt,
- Fig. 2:: eine Darstellung eines in der U-förmigen Öffnung verkanteten Stiftabschnitts bei einer Verriegelungsvorrichtung nach dem Stand der Technik,
- Fig. 3:: eine Darstellung einer erfindungsgemäßen Ausführungsform der Verriegelungsvorrichtung zusammen mit einem in der U-förmigen Öffnung angeordneten Stiftabschnitt,
- Fig. 4:: eine Darstellung einer weiteren erfindungsgemäßen Ausführungsform der Verriegelungsvorrichtung zusammen mit einem in der U-förmigen Öffnung angeordneten Stiftabschnitt,
- Fig. 5:: eine Darstellung einer weiteren erfindungsgemäßen Ausführungsform der Verriegelungsvorrichtung zusammen mit einem in der U-förmigen Öffnung angeordneten Stiftabschnitt,
- Fig. 6:: eine Darstellung einer weiteren erfindungsgemäßen Ausführungsform der Verriegelungsvorrichtung zusammen mit einem in der U-förmigen Öffnung angeordneten Stiftabschnitt,
- Fig. 7:: eine Darstellung einer weiteren erfindungsgemäßen Ausführungsform der Verriegelungsvorrichtung zusammen mit einem in der U-förmigen Öffnung angeordneten Stiftabschnitt, und
- Fig. 8:: eine Darstellung einer weiteren erfindungsgemäßen Ausführungsform der Verriegelungsvorrichtung zusammen mit einem in der U-förmigen Öffnung angeordneten Stiftabschnitt.

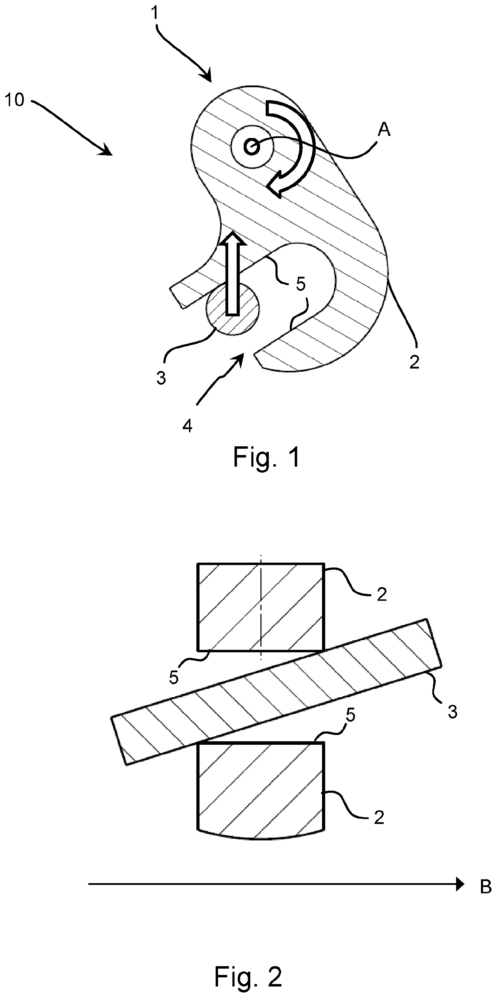

Fig. 1 zeigt eine Schnittdarstellung der erfindungsgemäßen Verriegelungsvorrichtung 1 mit einem in die U-förmige Öffnung 4 einzuführenden Stiftabschnitt 3.

Das Ausführungsbeispiel gilt für V- oder C-förmige Öffnungen entsprechend.

Die Verriegelungsvorrichtung 1 umfasst dabei einen Haken 2, der über eine Drehachse A gedreht werden kann. Die Drehung ist dabei in Fig. 1 durch einen gebogenen Pfeil dargestellt und steht für die verschiedenen Drehpositionen, die der Haken 2 einnehmen kann.

Darüber hinaus erkennt man einen in seinem Querschnitt kreisförmig ausgebildeten Stiftabschnitt 3, dessen Bewegungsrichtung über einen geradlinig verlaufenden Pfeil charakterisiert ist. Das Ausüben dieser geradlinigen Bewegung führt zu einer Drehung des Hakens 2 um dessen Drehachse A, sodass nach Beendigung der Bewegung des Stiftabschnitts eine Verriegelung des Stiftabschnitts 3 durch den Haken 2 erfolgen kann. Bspw. ist der Haken 2 drehbar an einer Flugzeugstruktur befestigt und der Stiftabschnitt 3 fest an einem einfachbaren Fahrwerk eines Flugzeugs angeordnet. Die durch den geradlinigen Pfeil dargestellte Aufwärtsbewegung des fest am Fahrwerk angeordneten Stiftabschnitts 3 in den Haken 2 hinein, führt zu einem Schließen des Hakens und zu einem Einnehmen der verriegelbaren Position, welche im Anschluss gesichert wird.

Fig. 2 zeigt ein Verkanten von Stiftabschnitt 3 in der U-förmigen Öffnung 4. Dabei ist die Darstellung in Fig. 2 so gewählt, dass man in die U-förmige Öffnung zur verfiel hier hineinblickt. Da der Stiftabschnitt 3 gegenüber der Drehachse A des Hakens 2 geneigt ist, kann es zu einem klemmenden Kontakt zwischen den Schenkeln 5 der U-förmigen Öffnung 4 und der Außenkontur des Stiftabschnitts 3 kommen.

Dem Fachmann ist klar, dass die in den Figuren dargestellten Dimensionierungen zu Illustrationszwecken teilweise stark vereinfacht und mit deutlich mehr Spiel als tatsächlich vorhanden dargestellt sind.

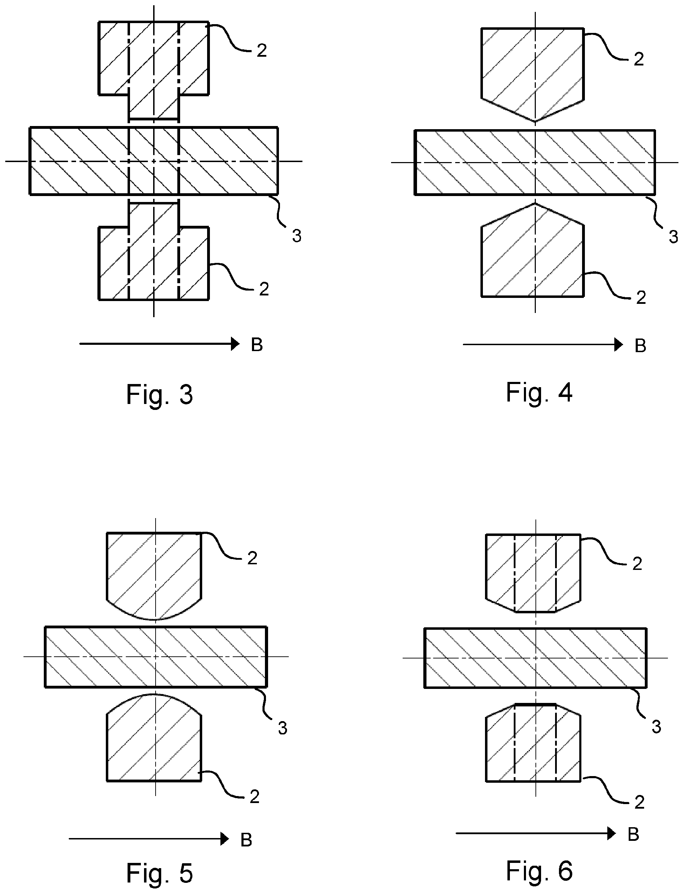

Fig. 3 zeigt in einer zu Fig. 2 ähnlichen Ansicht eine Ausführungsform der vorliegenden Erfindung, bei der die Kontur der Schenkel 5 in Breitenrichtung nicht konstant ausgebildet ist. Die Breitenrichtung B ist dabei zum einfacheren Verständnis in der Fig. 3 dargestellt und verläuft parallel zu Drehachse A aus Fig. 1.

Man erkennt, dass die beiden Schenkel 5, welche die U-förmige Öffnung 4 zusammen mit dem die beiden Schenkel 5 verbindenden Stegabschnitt (in Fig. 3 nicht dargestellt) definieren, eine ballige Kontur aufweisen, die zu ihrer Mitte hin ihre maximale Erstreckung hin zum Öffnungsbereich besitzt. Dabei ist die hier gewählte Anzahl an Stufen nicht für die vorliegende Erfindung beschränkend, da der Fachmann unmittelbar versteht, dass auch eine größere Stufenanzahl den Kern der Erfindung wiedergibt.

Fig. 4 zeigt in einer analogen Ansicht wie zur vorhergehenden Fig. 3 eine weitere Ausführungsform der vorliegenden Erfindung, bei der die in Breitenrichtung verlaufende Kontur eines jeden der beiden Schenkel mittig (im Breitenrichtung gesehen) spitz zuläuft. Von einem in Breitenrichtung gesehenen Endabschnitt läuft also eine geradlinige Schräge hin zu einer Mitte, bis diese wieder zu dem anderen Endabschnitt (in Breitenrichtung B gesehen) geradlinig abfällt.

Nach einer solchen Ausgestaltung wird das Spiel zum Aufnehmen des Stiftabschnitts 3 verringert und gleichzeitig eine mögliche Verdrehung ohne Kontakt mit einem Schenkel vergrößert. Vorteilhaft hieran ist, dass nun auch bei einem ungewünschten Verdrehen der Längsachse des Stiftabschnitts 3 gegenüber der U-förmigen Öffnung 4 erst sehr viel später ein Kontakt mit einem der beiden Schenkel 5 erfolgt, als dies bei der aus dem Stand der Technik bekannten Umsetzung nach Fig. 2 der Fall gewesen wäre.

Fig. 5 zeigt in einer analogen Ansicht zur vorhergehenden Fig. 4 eine weitere Ausführungsform der vorliegenden Erfindung, bei der die in Breitenrichtung verlaufende Kontur eines jeden der beiden Schenkel bogenförmig ausgestaltet ist. Die sich konvex zu einem Inneren der Öffnung erhebende Kontur ist dabei nun kontinuierlich in Breitenrichtung in Bogenform ausgebildet, was eine deutlich geringere Beanspruchung bei einem Kontakt mit dem aufzunehmenden Stiftabschnitt 3 bewirkt.

Fig. 6 zeigt in einer analogen Ansicht zur vorhergehenden Fig. 5 eine weitere Ausführungsform der vorliegenden Erfindung, bei der die in Breitenrichtung verlaufende Kontur eines jeden der beiden Schenkel in ihrer Mitte parallel zur Breitenrichtung und an den beiden Außenabschnitten jeweils zu einem Außenabschnitt hin abschüssig ausgebildet ist. Diese konvex in die Öffnung der U-förmigen Aufnahme 4 vorstehende Ausgestaltung der beiden Schenkel 5 erlaubt ebenfalls eine größere Verdrehung als eine gleich breite Umsetzung nach dem bekannten Stand der Technik.

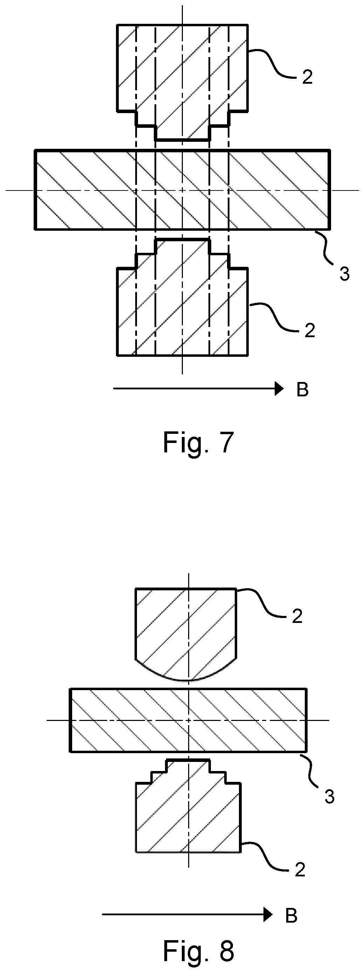

Fig. 7 zeigt in einer analogen Ansicht zur vorhergehenden Fig. 6 eine weitere Ausführungsform der vorliegenden Erfindung, bei der die in Breitenrichtung verlaufende Kontur ballig ausgebildet ist und mehrere Stufen umfasst. Dabei ist der Mittenbereich (in Breitenrichtung B gesehen) ebenfalls derjenige Bereich, der am weitesten von dem Schenkel in die U-förmige Öffnung 4 hineinragt und zu seinem linken bzw. rechten Endabschnitt hin abfällt.

Fig. 8 zeigt in einer analogen Ansicht zur vorhergehenden Fig. 7 eine weitere Ausführungsform der vorliegenden Erfindung, bei der die einander zugewandten Schenkel 5 unterschiedlich zueinander ausgebildet sind. Der in Fig. 8 oben dargestellte Schenkel ist dabei entsprechend Fig. 5, der in Fig. 8 unten dargestellte Schenkel entsprechend Fig. 7 ausgebildet. Von der Erfindung ist es daher ebenfalls umfasst, dass die beiden Schenkel 5 von einer gemeinsamen U-förmigen Öffnung 4 unterschiedlich ausgebildet sein können.

### Bezugszeichenliste:

- 1: Verriegelungseinrichtung
- 2: Haken
- 3: Stiftabschnitt
- 4: U-förmige Öffnung
- 5: Schenkel

## Patentansprüche

1. Verriegelungsvorrichtung (1) für bewegliche Komponenten, insbesondere Flugzeugkomponenten wie ein Flugzeugfahrwerk, umfassend:
einen um eine Drehachse (A) drehbaren Haken (2) zum Aufnehmen eines fest an der beweglichen Komponente angeordneten Stiftabschnitts (3), wobei
der Haken (2) eine U-, V- oder C-förmige Öffnung (4) aufweist, die dazu ausgelegt ist, bei einer ersten Drehposition den Stiftabschnitt (3) in einem verriegelten Zustand aufzunehmen und bei einer zweiten Drehposition den Stiftabschnitt (3) in einem entriegelten Zustand freizugeben,
**dadurch gekennzeichnet, dass**
mindestens einer der beiden Schenkel (5) der U-förmigen Öffnung (4) in Breitenrichtung (B) eine nicht konstante Kontur aufweist.

2. Vorrichtung (1) nach Anspruch 1, wobei die nicht konstante Kontur mindestens einer der beiden Schenke (5)I der U-, V- oder C-förmigen Öffnung (4) in Breitenrichtung konvex ausgebildet ist, vorzugsweise durch das Vorsehen einer balligen Struktur.

3. Vorrichtung (1) nach einem der vorhergehenden Ansprüche, wobei die nicht konstante Kontur mindestens einer der beiden Schenkel (5) der U-, V- oder C-förmigen Öffnung (4) in Breitenrichtung derart ausgebildet ist, dass diese in ihrer in Breitenrichtung gesehenen Mitte eine maximale Erstreckung hin zum gegenüberliegenden Schenkel (5) besitzt, vorzugsweise wobei die Erstreckung von der in Breitenrichtung gesehenen Mitte zu einem jeden der beiden Randbereiche kontinuierlich oder diskontinuierlich abnimmt.

4. Vorrichtung (1) nach einem der vorhergehenden Ansprüche, wobei die beiden Schenkel (5) in Breitenrichtung gesehen eine identische Kontur besitzen, vorzugsweise über ihre jeweilige Länge hinweg, bevorzugterweise wobei die Länge eines jeweiligen Schenkels (5) von dem zugehörigen Stegabschnitt zu einem distalen Ende des Schenkels (5) verläuft.

5. Vorrichtung (1) nach einem der vorhergehenden Ansprüche 1-4, wobei die beiden Schenkel (5) in Breitenrichtung gesehen eine unterschiedliche Kontur besitzen, vorzugsweise wobei die Länge eines jeweiligen Schenkels (5) von dem zugehörigen Stegabschnitt zu einem distalen Ende des Schenkels (5) verläuft.

6. Vorrichtung (1) nach einem der vorhergehenden Ansprüche, wobei die Breitenrichtung parallel zur Drehachse des Hakens (2) verläuft und/oder die jeweilige Kontur der Schenkel (5) der U-, V- oder C-förmigen Öffnung (4) diejenigen Flächen sind, die einander zugewandt sind und zwischen denen der Stiftabschnitt (3) zum Aufnehmen einer verriegelten Position geführt ist.

7. Vorrichtung (1) nach einem der vorhergehenden Ansprüche, wobei die beiden Schenkel (5) der U-, V- oder C-förmigen Öffnung (4) in ihrer Längsrichtung parallel, im Winkel oder gekrümmt zueinander verlaufen.

8. Vorrichtung (1) nach einem der vorhergehenden Ansprüche, wobei die U-, V- oder C-förmige Öffnung (4) zwei im Wesentlichen geradlinig oder gekrümmt verlaufende Schenkel (5) und einen die beiden Schenkel (5) miteinander verbindenden gekrümmten Stegabschnitt umfasst bzw. hieraus besteht.

9. Vorrichtung (1) nach einem der vorhergehenden Ansprüche, wobei die U-, V- oder C-förmige Öffnung (4) zwei Schenkel (5) unterschiedlicher Länge besitzt.

10. Vorrichtung (1) nach einem der vorhergehenden Ansprüche, wobei die U-, V- oder C-förmige Öffnung (4) in einer Schnittansicht, entlang einer Ebene, dessen Normale parallel zur Drehachse des Hakens (2) ist, ausgebildet ist.

11. System aus Verriegelungsvorrichtung (1) und beweglicher Komponente, insbesondere Flugzeugkomponente wie ein Flugzeugfahrwerk, wobei die Verriegelungsvorrichtung (1) nach einem der vorhergehenden Ansprüche ausgestaltet ist, vorzugsweise wobei die bewegliche Komponente eine Flugzeugkomponente ist, insbesondere ein einfahrbares Flugzeugfahrwerk, eine Türe, eine Landeklappe oder eine Flügelspitze, welche in einem eingefahrenen/eingeklappten Zustand durch die Verriegelungsvorrichtung (1) verriegelbar ist.

12. System (10) nach dem vorhergehenden Anspruch 11, wobei die Drehachse des Hakens (2) parallel zur Längsachse des Stiftabschnitts (3) angeordnet ist, wobei vorzugsweise eine Abweichung der Parallelität von der Drehachse des Hakens (2) zur Längsachse des Stiftabschnitts (3) einen unerwünschten Zustand darstellt.

13. System (10) nach einem der vorhergehenden Ansprüche 11 oder 12, wobei der Stiftabschnitt (3) an einem oder beiden Endbereichen an einer Halterung der beweglichen Komponente befestigt ist oder integraler Bestandteil dieser ist.

14. System (10) nach dem vorhergehenden Anspruch 13, wobei das Umgreifen des Hakens (2) an dem Stiftabschnitt (3) in einem Bereich erfolgt, der in etwa mittig, vorzugsweise im mittleren Drittel der Längsausdehnung des Stiftabschnitts (3), bevorzugterweise im mittleren Fünftel, zwischen den an den Endbereichen vorgesehenen Halterungen des Stiftabschnitts (3) ausgebildet ist.

15. Luftfahrzeug mit einer Verriegelungsvorrichtung (1) nach einem der vorhergehenden Ansprüche 1-10 oder einem System (10) nach einem der vorhergehenden Ansprüche 11-14.
